# EUROPÄISCHE PATENTANMELDUNG

(11) **EP 2 323 234 A2**
(43) Veröffentlichungstag der Anmeldung: **18.05.2011**
(21) Anmeldenummer: 10014497.1
(22) Anmeldetag: 11.11.2010
(51) Int. Cl.: H02B 1/03, H02B 1/052

(54) **Montageplatte für elektronische Stromzähler und Zusatzgeräte**

(30) Priorität: 11.11.2009 DE 102009052507
(71) Anmelder: Hager Electro GmbH & Co. KG, 66440 Blieskastel (DE)
(72) Erfinder: Hauck, Johannes, 66440 Blieskastel (DE)
(74) Vertreter: Bernhardt, Reinold

(57) **Zusammenfassung**

Die Erfindung betrifft ein Zusatzgerätesystem mit Montageplatte für elektronische Stromzähler (1). Das System nach der Erfindung ist gekennzeichnet durch einen mit dem elektronischen Stromzähler verbindbaren Sockelteil (10), der einen Sitz (11,12) für die Aufnahme eines elektrisch und mechanisch an den Sockelteil (10) koppelbaren Zusatzgerätemoduls (9,9') aufweist, wobei an den Sockelteil (10) wahlweise unterschiedliche Zusatzgerätemodule oder/und Zusatzgerätemodule (9,9') in unterschiedlicher Anzahl koppelbar sind.

## Beschreibung

Die Erfindung betrifft ein Zusatzgerätesystem für elektronische Stromzähler.

Elektronische Stromzähler werden zunehmend anstelle herkömmlicher, elektromechanischer Stromzähler eingesetzt. Durch Einsatz geeigneter Adapter lassen sich zur Installation der elektronischen Stromzähler die für die herkömmlichen Stromzähler verwendeten Zähleranschlussplätze nutzen. Die DE 102 61 206 B4 beschreibt einen solchen Adapter, der neben einem elektronischen Stromzähler auf eine Hutprofilträgerschiene montierte Zusatzgeräte aufnehmen kann, die z.B. der Kommunikation mit dem Stromversorgungsunternehmen dienen.

Der vorliegenden Erfindung liegt die Aufgabe zugrunde, weitere Möglichkeiten zur Kombination elektronischer Stromzähler mit Zusatzgeräten zu erschließen.

Diese Aufgabe wird durch ein Zusatzgerätsystem gelöst, das gekennzeichnet ist durch einen mit dem elektronischen Stromzähler verbindbaren Sockelteil, der einen Sitz für die Aufnahme eines elektrisch und mechanisch an den Sockelteil koppelbaren Zusatzgerätemoduls aufweist, wobei an den Sockelteil wahlweise unterschiedliche Zusatzgerötemodule oder/und Zusatzgerätemodule in unterschiedlicher Anzahl koppelbar sind.

Vorteilhaft erlaubt es diese Erfindungslösung, Zusatzgeräte in einem genau dem jeweiligen Bedarf angepassten Umfang zu installieren, indem der universell für verschiedene Zusatzgerätemodule verwendbare Sockelteil mit Zusatzgerätemodulen bestückt wird, die den gewünschten Funktionsumfang aufweisen. Eine bedarfsgerechte Gerätekonstellation lässt sich baukastenartig zusammenstellen.

Vorzugsweise ist der genannte Sitz des Sockelteils zur Aufnahme von maximal drei oder auch mehr als drei Zusatzgerätemodulen vorgesehen.

Vorzugsweise umfasst das System neben äußerlich unterschiedlichen Zusatzgerätemodulen auch Zusatzgerätemodule, die äußerlich baugleich sind und sich ggf. nur durch unterschiedliche Programmierungen unterscheiden.

Der Sockelteil kann Schienenkontakte zur elektrischen Ankopplung der Zusatzgerätemodule aufweisen, die aufgrund ihrer Längenausdehnung jeweils mehrere Zusatzgerätemodule kontaktieren können.

In einer besonders bevorzugten Ausführungsform der Erfindung ist der Sitz als die Zusatzgerätemodule aufnehmender Schacht ausgebildet. Zweckmäßig sind die Zusatzgerätemodule in den Schacht einsteckbar und vorzugsweise im Schacht verrastbar.

Der Aufnahmesitz kann Einrichtungen zur Führung oder/und Halterung der Zusatzgerätemodule innerhalb des Sitzes aufweisen.

In einer Ausführungsform der Erfindung ist der Sockelteil in einen elektronischen Stromzähler integriert oder der Sockelteil lässt sich auf einer bei einem elektronischen Stromzähler angeordneten Hutprofilträgerschiene montieren.

Die Erfindung wird nachfolgend anhand von Ausführungsbeispielen und der beiliegenden, sich auf diese Ausführungsbeispiele beziehenden Zeichnungen näher erläutert. Es zeigen:
- Fig. 1: eine Zähleranschlussplatzinstallation für einen mit Zusatzgeräten betriebe- nen elektronischen Stromzähler, und
- Fig. 2: verschiedene Möglichkeiten zur Kombination des Stromzählers von Fig. 1 mit Zusatzgeräten.

Eine Zähleranschlussplatzinstallation für einen elektronischen Stromzähler 1 umfasst eine Zählertragplatte 2. Bei der Zähleranschlussplatzinstallation handelt es sich um einen Adapter, der sich am Zählerkreuz eines Zähleranschlussplatzes für einen herkömmlichen elektro-mechanischen Stromzähler befestigen lässt. Neben einer Kabelanschlussleiste 3 umfasst der Adapter auf einer Grundplatte 4 angebrachte Hutprofilträgerschienen 5 und 6 für die Aufnahme von Zusatzgeräten.

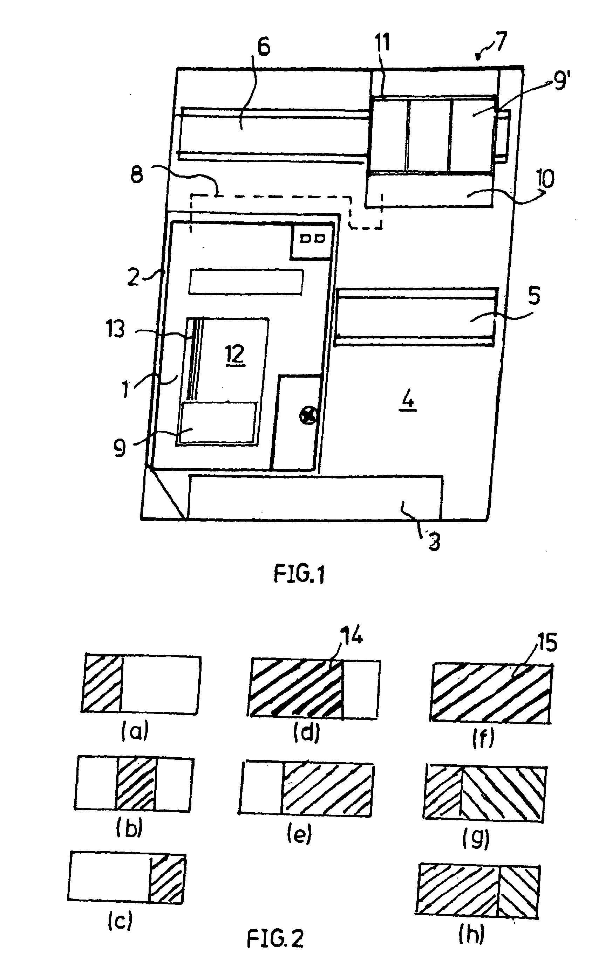

Fig. 1 zeigt beispielhaft ein auf der Hutprofilträgerschiene 6 montiertes Zusatzgerät 7. Zwischen dem Zusatzgerät 7 und dem elektronischen Stromzähler 1 besteht eine Leitungsverbindung 8. Ein weiteres Zusatzgerät mit einem Zusatzgerötemodul 9 ist unmittelbar mit dem Stromzähler 1 verbunden.

Das auf der Trägerschiene 6 montierte Zusatzgerät 7 umfasst einen Sockelteil 10, der einen Aufnahmeschacht 11 bildet, in den in dem betrachteten Beispiel drei Zusatzgerätemodule 9' unter elektrischer und mechanischer Verbindung mit dem Sockelteil 10 eingesteckt sind. Die mit dem Zusatzgerätemodul 9 äußerlich baugleichen Zusatzgerätemodule 9' sind in dem Aufnahmeschacht 11 durch nicht gezeigte Teile geführt und eingerastet.

Kabelanschlüsse und sonstige Elemente zur Verbindung des Zusatzgerätes 7 mit dem elektronischen Stromzähler 1 und anderen Einrichtungen sind allein am Sockelteil 10 vorgesehen. Vorteilhaft brauchen beim Austausch von Zusatzgerätemodülen 9' keine derartigen Verbindungen gelöst oder neu hergestellt zu werden.

Der unmittelbar mit dem Stromzähler 1 verbundene Zusatzgerätemodul 1 ist in einen im Stromzähler 1 gebildeten Aufnahmeschacht 12 eingesteckt, wo er wie die Anschlusselemente 9' geführt und eingerastet ist. Am Boden des Aufnahmeschachts 12 befinden sich Kontaktschienen 13, über die der Zusatzgerätemodul 9 und zwei weitere dem Zusatzgerätemodul 9 entsprechende Module elektrisch mit dem Stromzähler verbindbar sind.

Entsprechende Kontaktschienen zur elektrischen Verbindung der Zusatzgerätemodule mit dem Sockelteil 10 weist auch der Aufnahmeschacht 11 des Zusatzgerätes 7auf. Den oben genannten Anschluss- und Verbindungselementen des Sockelteils 10 entsprechende Elemente, die mit den Kontaktschienen 13 in Verbindung stehen, sind unmittelbar in den Stromzähler integriert, d.h. der Stromzähler selbst bildet den Sockelteil des Zusatzgerätes.

Der Sockelteil 10 und der einen Sockelteil bildende Stromzähler 1 sind in den hier einbezogenen deutschen Patentanmeldung 10 2008 063 878.1 und 10 2009 050 606.3 des Anmelders beschrieben.

Fig. 2 zeigt weitere Möglichkeiten für die Bestückung des Aufnahmeschachts 11 bzw. 12 mit Zusatzgerätemodulen.

Fig. 2a entspricht der Stellung des in Fig. 1 gezeigten Zusatzgerätemoduls 9 innerhalb des Aufnahmeschachts 12. Fig. 2b und c zeigen zwei weitere mögliche Steckpositionen dieses Zusatzgerätemoduls.

Gemäß Fig. 2d und e ist in den Aufnahmeschacht 11 bzw. 12 ein zwei Steckplätze ausfüllender Zusatzgerätemodul 14 in zwei möglichen Stellungen einsteckbar.

Fig. 2f zeigt einen den Aufnahmeschacht 11 bzw. 12 vollständig ausfüllenden Zusatzgerätemodul 15.

Fig. 2g und h zeigen Kombinationen aus den Zusatzgerätemodulen 9 und14 in den beiden möglichen Steckpositionen.

Der den gesamten Aufnahmeschacht ausfallende Vollmodul 15 kann ggf. zur Bildung eines mehreren Stromzählern gemeinsamen Zusatzgerätes dienen.

## Patentansprüche

1. Zusatzgerätesystem für elektronische Stromzähler (1),
**gekennzeichnet durch** einen mit dem elektronischen Stromzähler (1) verbindbaren Sockelteil (10), der einen Sitz (11,12) für die Aufnahme eines elektrisch und mechanisch an den Sockelteil koppelbaren Zusatzgerätemoduls (9,14,15) aufweist, wobei an den Sockelteil (10) wahlweise unterschiedliche Zusatzgerätemodule (14,15) oder/und Zusatzgerätemodule (9,9') in unterschiedlicher Anzahl koppelbar sind.

2. Zusatzgerätesystem nach Anspruch 1,
**dadurch gekennzeichnet,**
**dass** der Sitz (11,12) zur Aufnahme von maximal drei oder mehr als drei Zusatzgerätemodulen (9') vorgesehen ist.

3. Zusatzgerätesystem nach Anspruch 1 oder 2,
**dadurch gekennzeichnet,**
**dass** das System Zusatzgerätemodule (9,9') umfasst, die wenigstens äußerlich baugleich sind.

4. Zusatzgerätesystem nach einem der Ansprüche 1 bis 3,
**dadurch gekennzeichnet,**
**dass** der Sockelteil (10) Schienenkontakte (13) zur elektrischen Ankopplung der Zusatzgerätemodule (9) umfasst.

5. Zusatzgerätesystem nach einem der Ansprüche 1 bis 4,
**dadurch gekennzeichnet,**
**dass** der Sitz als die Zusatzgerätemodule (9,14,15) aufnehmender Schacht (11,12) ausgebildet ist.

6. Zusatzgerätesystem nach einem der Ansprüche 1 bis 5,
**dadurch gekennzeichnet,**
**dass** der Aufnahmesitz (11,12) Einrichtungen zur Führung oder/und Halterung der Zusatzgerätemodule (9,14,15) innerhalb des Aufnahmesitzes (11,12) aufweist.

7. Zusatzgerätesystem nach Anspruch 6,
**dadurch gekennzeichnet,**
**dass** die Zusatzgerätemodule (9,14,15) in den Schacht einsteckbar und vorzugsweise in dem Schacht verrastbar sind.

8. Zusatzgerätesystem noch einem der Ansprüche 1 bis 7,
**dadurch gekennzeichnet,**
**dass** der Sockelteil in einen elektronischen Stromzähler (1) integriert oder der Sockelteil (10) auf einer bei einem elektronischen Stromzähler (1) angeordneten Hutprofilträgerschiene (5,6) montierbar ist.
